Europäisches Patentamt

European Patent Office

Office européen des brevets

(11) Publication number: **0 204 868 B1**

## EUROPEAN PATENT SPECIFICATION

(45) Date of publication of patent specification: **18.09.91**

(51) Int. Cl.⁵: **B60C 9/14**, B60C 13/00

(21) Application number: **85116091.1**

(60) Publication number of the earlier application in accordance with Art.76 EPC: **0 053 522**

(22) Date of filing: **03.12.81**

(54) Pneumatic tires.

(30) Priority: **03.12.80 JP 169658/80**
**03.12.80 JP 169659/80**

(43) Date of publication of application:
**17.12.86 Bulletin 86/51**

(45) Publication of the grant of the patent:
**18.09.91 Bulletin 91/38**

(84) Designated Contracting States:
**FR GB SE**

(56) References cited:
**FR-A- 1 154 304      FR-A- 1 296 073**
**FR-A- 1 382 994      FR-A- 2 162 667**
**US-A- 2 925 846      US-A- 3 100 518**

(73) Proprietor: **BRIDGESTONE TIRE COMPANY LIMITED**
**10-1, Kyobashi 1-Chome Chuo-Ku**
**Tokyo(JP)**

(72) Inventor: **Matsumoto, Kenji**
**2800-1, Ogawahigashi-Cho**
**Kodaira City Tokyo(JP)**
Inventor: **Suzuki, Yasuo**
**1562-19, Ninomiya**
**Akigawa City Tokyo(JP)**

(74) Representative: **Whalley, Kevin**
**MARKS & CLERK 57/60 Lincoln's Inn Fields**
**London WC2A 3LS(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to pneumatic tires, and more particularly to pneumatic tires having a high resistance to cut growth, which are to be used on vehicles intended to be run at least partly on rough roads which are liable to cause cut failure in such a tire. In particular the invention relates to tires of this type having an improved performance against cut damage when applied to for example construction trucks and dump trucks.

Since tires of this type are mainly used on rough roads, the tire body, particularly the side portion thereof, is frequently subjected to cut damage due to contacting with for example sharp stones and rocks, pieces of broken metal, and stubs remaining after tree felling. When such cut damage occurs, this damage gradually grows with the continuous running of the tire and proceeds into the inside of the tire and finally arrives at the carcass layer, whereby separation failure of the carcass ply or plies constituting the carcass layer is caused. Alternatively, the cut damage further penetrates beyond the carcass layer into the inside of the tire to cause air leakage.

In general, the risk of causing the above failures tends to be higher in the side portion of the tire than in the crown portion thereof because the side portion is relatively unprotected as compared with the crown portion provided with a thick tread rubber and reinforced with a belt or breaker layer. Further, the likelihood of cut damage occurring is greater in the side portion of pneumatic radial tires having a carcass layer of radial structure and a belt layer superimposed thereon, wherein the carcass layer is composed of at least one rubberized ply, each ply containing steel cords arranged substantially parallel to the radial plane of the tire, and wherein the belt layer has a high circumferential rigidity.

Various attempts have been made to overcome such cut damage as well as the resulting separation failure of the carcass and air leakage from the tire, but none of these has proved to be satisfactory.

For example, a reinforcing cord layer of fibre material may be disposed in the side portion of the tire outside the carcass layer to make the depth of side cut damage shallow, as disclosed in Japanese Patent laid open No. 651/72. In this case, the effect of preventing cut damage itself is improved to some extent, but once cut damage is caused the growth of such cut damage cannot be prevented and further the separation failure is apt to occur from the end of the reinforcing cord layer. A similar result is caused even when the cord of the reinforcing cord layer is composed of metallic material.

As disclosed in Japanese Patent Application Publication No. 13,322/72, a rubber swollen portion may be disposed in a region extending from the shoulder portion of the tire to the side portion thereof to prevent side cuts. In this case, protection of the tire side portion is effectively attained to some extent, but again once cut damage is caused the growth of such cut damage cannot be prevented.

Also, a thick rubber layer may be disposed in the side portion of the tire inside the carcass layer, as disclosed in Japanese Patent Application Publication No. 40,483/70. In this case, it is anticipated that the rubber layer prolongs the time until air leakage is caused after the occurrence of cut damage, but the growth of the cut damage cannot basically be prevented.

Therefore, the arrangement of the rubber layer does not sufficiently contribute to improve the resistance to air leakage. Furthermore, the increase of the thickness of the rubber layer increases the heat generation and the strain applied to the bead portion of the tire and also the end portion of the belt layer is increased, and as a result the durability of the tire is adversely affected and the production becomes difficult and the cost is increased.

Attention is also drawn to the disclosure of US-A-2925846 (corresponding to the preamble of claim 1), according to which a protective device sandwiching an intermediate annular layer between an inner layer and an outer layer is arranged inside the tire to prevent puncturing and the like; the inner layer and outer layer are composed of substantially inelastic material, and the intermediate annular layer is formed by pouring a sealing liquid into a porous resilient deformable material.

It is apparent that a tire mounted on a vehicle running on a rough road, particularly the side portion thereof, is unavoidably subjected to cut damage to some extent. The present invention therefore aims to obviate the various drawbacks of the prior art as describe above by preventing the growth of cut damage to the tire side portion to improve the prevention of air leakage of the tire and further the prevention of separation failure of the carcass ply without adversely affecting the other tire performances.

As a result of many experiments and various investigations, the present inventors have found that if a middle rubber layer having a modulus lower than that of the adjoining rubber is provided at the interior of the rubber layer of the tire, crack growth from the outer surface of the rubber layer is blocked by the low modulus middle rubber layer.

The present invention provides a pneumatic tire, comprising a crown portion including a tread, a pair of side portions extending from the crown portion, a pair of bead portions located at the respective ends of the side portions remote from the crown portion, a carcass layer composed of at least one rubberized cord ply toroidally extending between the bead portions, and a liner layer disposed inside and adjacent the carcass layer, wherein a low modulus middle rubber layer composed of rubber having a modulus lower than that of the adjoining material is provided in the liner layer at at least the region of a tire side portion, characterized in that for intercepting crack growth from the outside of the tire, said liner layer consists mainly of a rubbery elastomeric layer, said middle rubber layer has an elongation at break of not less than 600% and the difference between the modulus of the rubber forming the low modulus middle rubber layer and that of the rubber of the liner layer adjacent the said middle rubber layer is not less than 20 kg/cm$^2$, preferably not less than 40 kg/cm$^2$, in 300% modulus.

The term "liner layer" as used herein means a reinforcing layer consisting mainly of a rubbery elastomer layer located adjacent to and at the inside of the carcass layer, other than an inner liner provided at the innermost portion of the tire for sealing.

The invention will be further described, by way of example only, with reference to the accompanying drawings, wherein:

Figures 1a and 1b are schematic views of test pieces to be used in an experiment for the intercepting of crack growth in the absence or presence of a low modulus middle rubber layer, respectively;

Figure 2 is a graph showing a relation between the modulus of the middle rubber layer and the strain repeating number until the crack growth is fixed; and

Figure 3 is a left half cross-sectional view of an embodiment of a tire according to the present invention.

By means of the present invention, the growth and penetration of a crack due to cut damage from the outer surface of a tire toward an inner surface can be intercepted by providing a low modulus middle rubber layer having a modulus lower than that of the adjoining rubber in a liner layer disposed inside and adjacent to a carcass layer of the tire.

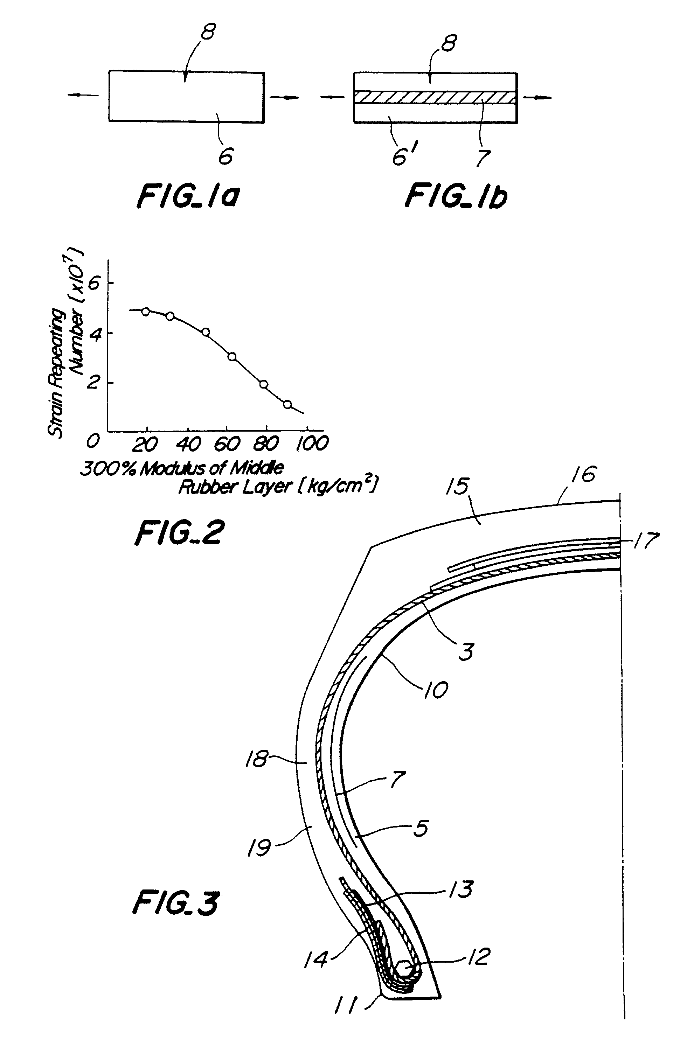

The inventors have confirmed that the intercepting effect can be attained by providing a low modulus middle rubber layer as mentioned above by comparing crack growing speeds of test pieces as shown in Figures 1a and 1b.

That is, the test pieces as shown in Figures 1a and 1b are respective rubber pieces 6,6' each having a length of 130 mm x a width of 25 mm x a thickness of 8 mm and a 300% modulus of 55 kg/cm$^2$. However, one of the test pieces has such a sandwich structure that a middle rubber layer 7 having a thickness of 2 mm and a 300% modulus of 25 kg/cm$^2$ is embedded in substantially the centre of the thickness of the rubber piece 6' as shown in Figure 1b.

Cut damage 8 is formed from the upper surface of each of the test pieces 6,6' up to a position corresponding to substantially 1/4 of the thickness of each test piece. Thereafter, the crack growth from the cut damage 8 is measured by subjecting the test piece to strong repeated strains under a tension force of about 20% in the lengthwise direction as shown by arrows in Figures 1a and 1b. As a result, in the test piece 6 having no low modulus middle rubber layer 7 as shown in Figure 1a, the crack growth continues toward the lower surface of the test piece and finally this piece is cut in half at a strain repeating number of $1 \times 10^6$. On the other hand, in the test piece 6' provided therein with the low modulus middle rubber layer 7 as shown in Figure 1b, the crack growth is intercepted by this middle rubber layer and does not continue beyond the rubber layer toward the lower surface of the test piece.

It is most effective if the low modulus middle rubber layer 7 in the present invention is provided at the side portion of the pneumatic tire to be used for running on rough grounds, at or near the position corresponding to maximum sectional width of the carcass layer in the side portion, especially in the case of radial tires. The low modulus middle rubber layer is preferably provided at at least the region of a tire side portion including the maximum sectional width of the carcass layer. The low modulus middle rubber layer may also be provided over the whole region of a tire side portion extending from the upper part of the bead portion to the shoulder portion of the tire.

Furthermore, it is preferable that the liner layer includes a cord reinforcing layer consisting of at least one rubberized cord ply. This is because when the tire is subjected to cut damage the circumferential strain owing to load concentrates at this cut damage portion, but the above described cord reinforcing layer serves to prevent this concentration. In this case, it is preferable to locate the cord reinforcing layer inside the low modulus middle rubber layer 7 in view of the mitigation of strain concentration. In particular, when the carcass layer is of radial structure, it is preferable to cross the cords in the cord reinforcing layer with the cords in the carcass layer at an angle of not greater than 35°.

The low modulus middle rubber layer may be arranged directly adjacent to the carcass layer, or the low modulus middle rubber layer may be arranged at the interior of the liner layer.

In the tire according to the invention, the carcass layer is preferably a radial carcass made of metal cords.

The rubber to be used in the formation of the low modulus middle rubber layer 7 preferably has a 300% modulus of not more than 50 kg/cm², more preferably not more than 30 kg/cm².

When the tire is subjected to cut damage, the concentration of strain occurs in the tip of a crack produced by the damage at the loading deformation as previously described. This phenomenon is not a constant stress phenomenon but a constant strain phenomenon, so that the lower the modulus, the lower the stress and hence the crack growth is blocked.

As apparent from Figure 2 illustrating the relation between the modulus and the strain repeating number until the crack in the test piece 6' of Figure 1b is fixed under a 10% tensile strain, the intercepting effect is apparent when the 300% modulus of the middle rubber layer 7 is not more than 50 kg/cm², particularly not more than 30 kg/cm², so that it is practically desired to use rubber having the above defined value of 300% modulus as the middle rubber layer.

Since the maximum value of strain in the strain concentration is about 500%, it is important that rubber used for the formation of the low modulus middle rubber layer is not broken at such a strain value. Considering this fact and further giving some allowance thereto, the elongation at break of the middle rubber layer is not less than 600%.

In order to sufficiently develop the effect of intercepting the crack growth, the difference of modulus between the rubber forming the low modulus middle rubber layer and the rubber adjacent to the middle rubber layer is not less than 20 kg/cm², preferably not less than 40 kg/cm², in the 300% modulus.

The thickness of the low modulus middle rubber layer is preferably 0.2 to 5 mm, more preferably 2 to 3 mm. When the thickness is less than 0.2 mm, the effect of the invention may not be sufficiently developed and also the production is difficult, while when the thickness exceeds 5 mm, the rigidity balance becomes bad, the cut damage itself is apt to be suffered and also there is a problem relating to the heat generation.

Further, it is preferable to form a fault surface having an extremely low adhesion between the low modulus middle rubber layer and the adjacent rubber thereof.

Figure 3 shows in cross-section the left half of a pneumatic radial tire of size 20.5 R 20 for running on rough grounds; the right half of the tire has the same structure as the left half.

In this case, a carcass layer 3 consists of one rubberized ply containing steel cords embedded therein and arranged along the radial plane of the tire and is turned around a bead core 12 in a bead portion 11 for fitting to a rim (not shown) from the inside to the outside thereof. In the bead portion 11 are further arranged a metal chafer 13 composed of one rubberized layer containing steel cord embedded therein, and a fibre chafer 14 composed of two rubberized layers each containing nylon cords embedded therein, the cords of which are crossed with each other, as a reinforcement. In an annular crown portion 15 a belt layer 17 composed of three steel cord plies is arranged between the carcass layer 3 and the tread 16.

At the innermost surface of the tire, an inner liner 10 is provided between both the left and right bead portions, and a liner layer 5 is disposed between the inner liner 10 and the carcass layer 3.

In the tire illustrated in Figure 3, the liner layer 5 is mainly composed of a rubbery elastomeric layer having a 100% modulus of 25 kg/cm² (300% modulus of 65 kg/cm²), and provided at its inside with a cord reinforcing layer (not shown) of two cord plies extending from the bead portion 11 to the shoulder portion of the tire, the cords of which plies are crossed at an angle of 15° with respect to the radial direction of the tire.

In this embodiment a low modulus middle rubber layer 7 having a 300% modulus of 22 kg/cm², an elongation at break of 895% and a thickness of 2.5 mm is arranged at the interior of the rubbery elastomeric layer of liner layer 5 near a position corresponding to substantially the maximum sectional width of the carcass layer in the tire side portion. A middle rubber layer is arranged in each of the tire side portions, but may be arranged in one side portion only. Moreover, the coating rubber for the carcass ply has a 300% modulus of 120 kg/cm².

Another test was made with respect to the tire as shown in Figure 3 and a comparative tire having the same structure as shown in Figure 3 except for the absence of the low modulus middle rubber layer.

In this test, cut damage was first formed in the side portion of the tire near the maximum width thereof to such a depth that the tip of the cut damage was located slightly outside the carcass layer, and then the depth of a crack growth from the cut damage during running of the tire was measured in a direction perpendicular to the carcass ply.

The tire of Figure 3 was found to be clearly superior to the comparative tire. That is, in the comparative tire having no low modulus middle rubber layer, the crack grew with increase of the running distance and finally air leakage occurred after a running distance of about 4 x 10³ km. On the other hand, in the tire of Figure 3, the crack growth was intercepted by the low modulus middle rubber layer and as a result no air leakage occurred even at the same running distance as described above.

Thus when a pneumatic tire according to the invention for use on an off-road vehicle is subjected to cut damage, the growth of the cut damage is effectively intercepted and air leakage failure or separation failure can be advantageously prevented without adversely affecting other tire performances.

## Claims

1. A pneumatic tire, comprising a crown portion (15) including a tread (16), a pair of side portions (18) extending from the crown portion, a pair of bead portions (11) located at the respective ends of the side portions remote from the crown portion, a carcass layer (3) composed of at least one rubberized cord ply toroidally extending between the bead portions, and a liner layer (5) disposed inside and adjacent the carcass layer, wherein a low modulus middle rubber layer (7) composed of rubber having a modulus lower than that of the adjoining material is provided in the liner layer (5) at at least the region of a tire side portion, characterized in that for intercepting crack growth from the outside of the tire, said liner layer (5) consists mainly of a rubbery elastomeric layer, said middle rubber layer (7) has an elongation at break of not less than 600% and the difference between the modulus of the rubber forming the low modulus middle rubber layer (7) and that of the rubber of the liner layer (5) adjacent the said middle rubber layer (7) is not less than 20 kg/cm², preferably not less than 40 kg/cm², in 300% modulus.

2. A tire as claimed in Claim 1, characterized in that the low modulus middle rubber layer (7) is provided at at least the region of a tire side portion including the maximum sectional width of the carcass layer.

3. A tire as claimed in Claim 1, characterized in that the low modulus middle rubber layer (7) is provided over the whole region of a tire side portion extending from the upper part of the bead portion to the shoulder portion of the tire.

4. A tire as claimed in any of Claims 1 to 3, characterized in that the low modulus middle rubber layer (7) is composed of rubber having a 300% modulus of not more than 50 kg/cm².

5. A tire as claimed in any of Claims 1 to 4, characterized in that the low modulus middle rubber layer (7) has a thickness of 0.2 to 5 mm.

6. A tire as claimed in any of Claims 1 to 5, characterized in that the low modulus middle rubber layer (7) is arranged directly adjacent to the carcass layer (3).

7. A tire as claimed in any of Claims 1 to 5, characterized in that the low modulus middle rubber layer (7) is arranged at the interior of the liner layer (5).

8. A tire as claimed in any of Claims 1 to 7, characterized in that the liner layer (5) is provided with at least one cord reinforcing layer (9) at the inside of the low modulus middle rubber layer (7).

9. A tire as claimed in Claim 8, characterized in that the cords in the said cord reinforcing layer (9) in the liner layer (5) cross with the cords in the carcass layer (3) at an angle of not greater than 35°.

10. A tire as claimed in any of Claims 1 to 9, characterized in that the carcass layer (3) is a radial carcass made of metal cords.

11. A tire as claimed in any of Claims 1 to 10, characterized in that a fault surface having a low adhesion is formed between the low modulus middle rubber layer (7) and the adjacent rubber thereof.

## Revendications

1. Bandage pneumatique comprenant une portion de couronne (15) englobant une bande de roulement (16), une paire de portions latérales (18) s'étendant depuis la portion de couronne, une paire de portions de talons (11) situées aux extrémités respectives des portions latérales à l'écart de la portion de couronne, une couche de carcasse (3) constituée d'au moins une nappe de câblés enrobés de caoutchouc et s'étendant sous forme toroïdale entre les portions de talons, ainsi qu'une couche de calandrage (5) disposée au sein de la couche de carcasse et en position adjacente à cette dernière, dans lequel on procure une couche médiane en caoutchouc (7) à module peu élevé, constituée d'un caoutchouc présentant un module inférieur à celui du matériau adjacent, dans la couche de calandrage (5), dans la région d'une portion latérale de bandage pneumatique, **caractérisé en ce que**, dans le but d'intercepter le développement de fissures à partir de l'extérieur du bandage pneumatique, la couche de calandrage (5) est principalement constituée d'une couche en caoutchouc élastomère, cette couche médiane en caoutchouc (7) possédant un allongement à la rupture qui n'est pas inférieur à 600% et la différence entre le module du caoutchouc constituant la couche médiane en caoutchouc (7) à module peu élevé et celui du caoutchouc de la couche de calandrage (5) adjacente à la couche médiane en caoutchouc (7), n'est pas inférieure à 20 kg/cm², de préférence, n'est pas inférieure à 40 kg/cm², dans un module de 300%.

2. Bandage pneumatique selon la revendication 1, **caractérisé en ce qu'**on procure la couche médiane en caoutchouc (7) à module peu élevé, au moins, dans la région d'une portion latérale de bandage pneumatique, qui englobe la grosseur de boudin maximale de la couche de carcasse.

3. Bandage pneumatique selon la revendication 1, **caractérisé en ce qu'**on procure la couche médiane en caoutchouc (7) à module peu élevé, sur toute la région d'une portion latérale de bandage pneumatique, qui s'étend depuis la partie supérieure de la portion de talons jusqu'à la portion d'épaulement du bandage pneumatique.

4. Bandage pneumatique selon l'une quelconque des revendications 1 à 3, caractérisé en ce que la couche médiane en caoutchouc (7) à module peu élevé est constituée d'un caoutchouc ayant un module à 300% qui n'est pas supérieur à 50 kg/cm².

5. Bandage pneumatique selon l'une quelconque des revendications 1 à 4, **caractérisé en ce que** la couche médiane en caoutchouc (7) à module peu élevé à une épaisseur de 0,2 à 5 mm.

6. Bandage pneumatique selon l'une quelconque des revendications 1 à 5, **caractérisé en ce que** la couche médiane en caoutchouc (7) à module peu élevé est disposée en position directement adjacente à la couche de carcasse (3).

7. Bandage pneumatique selon l'une quelconque des revendications 1 à 5, **caractérisé en ce que** la couche médiane en caoutchouc (7) à module peu élevé est disposée à l'intérieur de la couche de calandrage (5).

8. Bandage pneumatique selon l'une quelconque des revendications 1 à 7, **caractérisé en ce** qu'on munit la couche de calandrage (5) d'au moins une couche de câblés de renforcement (9) à l'intérieur de la couche médiane en caoutchouc (7) à module peu élevé.

9. Bandage pneumatique selon la revendication 8, **caractérisé en ce que** les câblés dans la couche de câblés de renforcement (9) dans la couche de calandrage (5) croisent les câblés de la couche de carcasse (3) en formant un angle qui n'est pas supérieur à 35°.

10. Bandage pneumatique selon l'une quelconque des revendications 1 à 9, **caractérisé en ce que** la couche de carcasse (3) est une carcasse à nappe radiale constituée par des câblés métalliques.

11. Bandage pneumatique selon l'une quelconque des revendications 1 à 10, **caractérisé en ce qu'**on forme une surface de défaillance ayant une faible adhérence entre la couche médiane en caoutchouc (7) à module peu élevé et le caoutchouc adjacent à cette dernière.

**Patentansprüche**

1. Luftreifen, umfassend einen Scheitelbereich (15) mit einer Lauffläche (16), zwei von dem Scheitelbereich ausgehende Seitenbereiche (18), zwei Wulstbereiche (11), die nahe den vom Scheitelbereich abliegenden Enden der Seitenbereiche angeordnet sind, eine Karkassenschicht (3), bestehend aus mindestens einer gummierten Gewebelage, die sich ringförmig zwischen den Wulstbereichen erstreckt, und eine Auskleidungsschicht (5), die an der Innenseite neben der Karkassenschicht angeordnet ist, wobei eine mittlere Gummischicht (7) mit kleinem Modul, die aus Gummi besteht, der einen kleineren Modul hat als das benachbarte Material, in der Auskleidungsschicht (5) zumindest im Bereich des Seitenbereichs des Reifens angeordnet ist, dadurch **gekennzeichnet**, daß die Auskleidungsschicht (5) zum Aufhalten einer Rißbildung von der Außenseite des Reifens hauptsächlich aus einer elastomeren Gummischicht besteht, wobei die mittlere Gummischicht (7) eine Bruchdehnung von mindestens 600% hat und wobei der Unterschied zwischen dem Modul des die mittlere Gummischicht (7) mit kleinem Modul bildenden Gummis und dem Modul des die Auskleidungsschicht (5) neben der mittleren Gummischicht (7) bildenden Gummis bei einem 300% Modul nicht kleiner als 20 kg/cm², vorzugsweise nicht kleiner als 40 kg/cm² ist.

2. Reifen nach Anspruch 1, dadurch **gekennzeichnet**, daß die mittlere Gummischicht (7) mit kleinem Modul zumindest im Bereich eines Seitenbereichs des Reifens vorgesehen ist, der die maximale Querschnittsbreite der Karkassenschicht umfaßt.

3. Reifen nach Anspruch 1, dadurch **gekennzeichnet**, daß die mittlere Gummischicht (7) mit kleinem Modul in dem gesamten Bereich eines Seitenbereichs des Reifens vorgesehen ist, der sich vom oberen Teil des Wulstbereichs bis zum Schulterbereich des Reifens erstreckt.

4. Reifen nach einem der Ansprüche 1 bis 3, dadurch **gekennzeichnet**, daß die mittlere Gummischicht (7) mit kleinem Modul aus Gummi besteht, der einen 300% Modul von nicht mehr als 50 kg/cm² hat.

5. Reifen nach einem der Ansprüche 1 bis 4, dadurch **gekennzeichnet**, daß die mittlere Gummischicht (7) mit kleinem Modul eine Dikke von 0,2 bis 5 mm hat.

6. Reifen nach einem der Ansprüche 1 bis 5, dadurch **gekennzeichnet**, daß die mittlere Gummischicht (7) mit kleinem Modul unmittelbar neben der Karkassenschicht (3) angeordnet ist.

7. Reifen nach einem der Ansprüche 1 bis 5, dadurch **gekennzeichnet**, daß die mittlere Gummischicht (7) mit kleinem Modul im Inneren der Auskleidungsschicht (5) angeordnet ist.

8. Reifen nach einem der Ansprüche 1 bis 7, dadurch **gekennzeichnet,** daß die Auskleidungsschicht (5) an der Innenseite der mittleren Gummischicht (7) mit kleinem Modul mit mindestens einer Kordverstärkungsschicht (9) versehen ist.

9. Reifen nach Anspruch 8, dadurch **gekennzeichnet**, daß die Fäden in der Kordverstärkungsschicht (9) in der Auskleidungsschicht (5) die Fäden der Karkassenschicht (3) unter einem Winkel von nicht größer als 35° kreuzen.

10. Reifen nach einem der Ansprüche 1 bis 9, dadurch **gekennzeichnet**, daß die Karkassenschicht (3) eine aus Metallfäden gebildete Radialkarkasse ist.

11. Reifen nach einem der Ansprüche 1 bis 10, dadurch **gekennzeichnet**, daß eine Störfläche mit geringer Adhäsion zwischen der mittleren Gummischicht (7) mit kleinem Modul und dem benachbarten Gummi derselben ausgebildet ist.

**FIG.1a**

**FIG.1b**

**FIG.2**

**FIG.3**

8